# EUROPEAN PATENT APPLICATION

(11) **EP 1 708 192 A1**
(43) Date of publication of application: **04.10.2006**
(21) Application number: 04788349.1
(22) Date of filing: 22.09.2004
(51) Int. Cl.: G11B 20/10, G11B 27/00, G06F 9/06, G06F 12/00, H04N 5/91

(54) **COPY PROGRAM AND RECORDING MEDIUM CONTAINING THE COPY PROGRAM**

(30) Priority: 22.01.2004 JP 2004014000
(71) Applicant: Konica Minolta Photo Imaging, Inc., Shinjuku-ku, Tokyo 163-0512 (JP)
(72) Inventor: UEDA, Yutaka, Konica Minolta Photo Imaging, Inc., Hachioji-shi, Tokyo 192-8505 (JP)
(74) Representative: Roberts, Mark Peter
(86) International application number: PCT/JP2004/014296
(87) International publication number: WO 2005/071679

(57) **Abstract**

This invention provides a copy program by which the data such as static image data or moving image data, music data, can be successively copied in a recording means such as a recording medium, by a simple operation, and the recording medium in which the copy program is recorded.

The copy program of the present invention makes the computer function as a means for recording any one of 1) a predetermined kind of data, 2) inputted data, 3) data in which the inputted data is converted and made, or inputted data, 4) data in which at least one part selected from the selected data is converted and made, and the program of itself, in the recording medium.

## Description

### TECHNICAL FIELD

The present invention relates to a copy program for copying a static image data, moving image data and music data, and a recording medium in which the copy program is recorded.

### BACKGROUND ART

Recently, it becomes a present state that various services relating to photography are provided. For example, the user takes a picture by a digital camera, the digital camera or a medium for the digital camera is bought into a photographic shop such as a mini-lab, and by using a unmanned terminal (kiosk) or a shop terminal, provided in the shop, the image data recorded in the digital camera or medium can be written in a recording medium such as CD-R, DVD-R (for example, Tokkaihei No. 5-182373).

Further, the user takes a picture by a film camera, and when exposed film is brought to a photographic shop such as a mini-lab, a service in which, after the photographic shop develops the film, the image data is read by using a reading device such as a scanner, written in a recording medium such as CD-R, DVD-R, and provided to the user, is also conducted.

Further, a service in which, the image data read from the digital camera or media, film, is converted into the image data of a file format which can be reproduced by an image reproduction device such as, for example, a DVD player or a DVD recorder, a game machine, and the original image data and the converted image data are written in a recording medium such as CD-R, DVD-R, is also conducted.

When the above described service is used, the recording medium in which the image data recorded in a digital camera or media or the image data converted for the image reproduction device is recorded, can be obtained, and further, when the image data recorded in the recording medium is backed-up in a hard disk of the computer device, the user can look at the image data, however, the image data is not only enjoyed by the user who made the recording medium, but there is also a case where the image data is wanted to be shown to the friend or acquaintance, and in that case, it is necessary that the image data recorded in the hard disk of the computer device is further copied in another recording medium.

However, in order to back-up the image data, by using a predetermined program (for example, Explorer of WINDOWs (R)), it is necessary that the user himself verifies the recording structure (folder structure or folder name) of the image data recorded in the recording medium, and refers to this recording structure and specifies a desired kind of image data and backs-up it, and the operations are troublesome. Particularly, it is severe to require the user who is unfamiliar to the operation of the computer device, such an operation, and there is a problem that many users can not use the image data.

Such a problem is generated not only in the static image data based on the photographic image, but also generated in the same manner in the moving image data obtained when photographed by a digital camera, or the music data, contents data obtained through the internet.

### DISCLOSURE OF INVENTION

In view of the above problem, this invention is attained, and the main object is to provide a copy program by which the data such as a static image data or moving images data, music data can be successively copied in the recording means such as the recording medium, by a simple operation, and a recording medium in which the copy program is recorded.

In order to attain the above object, the copy program of the present invention makes a computer function as a means for recording any one of the data in which at least one part selected from the data of 1) a predetermined kind of data, 2) inputted data, 3) the data into which the inputted data is converted and made or the inputted data, is converted and made, and the program of itself, in the recording medium.

In the present invention, the computer can be made a structure to further function as a means for discriminating the recording structure of the specified recording means, and referring to the recording structure, a means for reading the data to be recorded from the recording means into the recording medium, and as the recording structure, it can be made a hierarchical structure of the folder in which the data to be recorded in the recording medium is accommodated, or a structure to be specified based on the name of the folder.

Further, the copy program of the present invention makes the computer function as a means for recording the selected data and the program of itself into the recording medium.

Hereupon, in the present invention, as the data to be set as a predetermined kind of data, a slide-show program, slide-show setting file, application program such as the program data for print order, or the music data, image screen structural data, can be listed. Further, the selected data is the data which is selected by the user.

Further, in the present invention, as the data to be recorded in the recording medium, it is preferable that any one of the static image data, moving image data, music data or a program for reproducing the data is included.

Further, in the recording medium of the present invention, the copy program by which the computer is made to function as a means for recording any one of the data in which at least one part selected from the data of 1) a predetermined kind of data, 2) inputted data, 3) the data into which the inputted data is converted and made or the inputted data, is converted and made, and 4) selected data, and the program of itself, in the recording medium, is recorded.

In this manner, according to the structure of the present invention, because the recording medium in which at least a copy program by which the data such as the static image data or the moving image data, music data, and the data and the program of itself are copied as a set in the recording medium is recorded is provided to the user, when the copy program is used, the user can further successively copy the data which is backed up the computer device and the copy program in another recording medium, hereby, a system in which these data can be used by many users can be structured.

That is, according to the copy program of the present invention, and the recording medium in which the copy program is recorded, the data such as the static image data or moving image data, music data which are backed up from the recording medium, can simply be recorded in another recording medium, hereby, a system in which these data can be used by many users can be structured.

The reason is that, because the copy program by which the data such as the predetermined static image data or moving images data, music data, and the data and the program of itself, are copied as a set in the recording medium, and the application such as the slide-show program are recorded at need, when the user who made the recording medium uses the copy program, because the data backed-up by the computer device and the copy program are made a set, and can be recorded in yet another recording medium.

### BRIEF DESCRIPTION OF DRAWINGS

Fig. 1 is a view typically showing a structure of a recording medium making apparatus and a computer device according to the first example of the present invention.
Fig. 2 is a view showing another structure of the computer device according to the first example of the present invention.
Fig. 3 is a view showing another structure of the computer device according to the first example of the present invention.
Fig. 4 is a view showing another structure of the computer device according to the first example of the present invention.
Fig. 5 is a block diagram showing a means which is made to function by a copy program according to the first example of the present invention.
Fig. 6 is a flowchart view showing a making sequence of the recording medium by using the recording medium making apparatus according to the first example of the present invention.
Fig. 7 is a flowchart view showing a back-up sequence of the images data according to the first example of the present invention.
Fig. 8 is a flowchart view showing a making sequence of the recording medium by using a computer device according to the first example of the present invention.
Fig. 9 is a view showing the recording structure of the data in the recording medium of the first example of the present invention.
Fig. 10 is a view showing the recording structure of the data in a hard disk of the computer device of the first example of the present invention.
Fig. 11 is a view showing an image screen structural example displayed on a display means of the computer device according to the first example of the present invention.
Fig. 12 is a view typically showing the structure of the recording medium making apparatus and the computer device, according to the second example of the present invention.
Fig. 13 is a flowchart view showing a making sequence of the recording medium by using the computer device according to the second example of the present invention.
Fig. 14 is a view showing an image screen structural example displayed on the display means of the computer device according to the second example of the present invention.
Fig. 15 is a view showing an image screen structural example displayed on the display means of the computer device according to the second example of the present invention.
Fig. 16 is a view showing an image screen structural example displayed on the display means of the computer device according to the second example of the present invention.
Fig. 17 is a view showing an image screen structural example displayed on the display means of the computer device according to the second example of the present invention.

### BEST MODE FOR CARRYING OUT THE INVENTION

The copy program according to the present invention makes, in a its preferred embodiment, the computer function at least as a means for copying the data such as a predetermined or selected, inputted data, or the data into which at least one part selected from the data into which the inputted data is converted and made, or inputted data, is converted and made, the static image data, moving image data, application program, music data, and the program of itself, as a set in the recording medium, and when the recording medium in which the data and the copy program are recorded, is used, the user who made the recording medium, can use the data which is previously recorded in the recording medium, by backing-up to the computer device, further, by using the copy program, the user can record the backed-up data and the program of itself as a set in yet another recording medium, and when this operation is conducted repeatedly, the system in which the above data can be used by many users, can be structured.

### (Example 1)

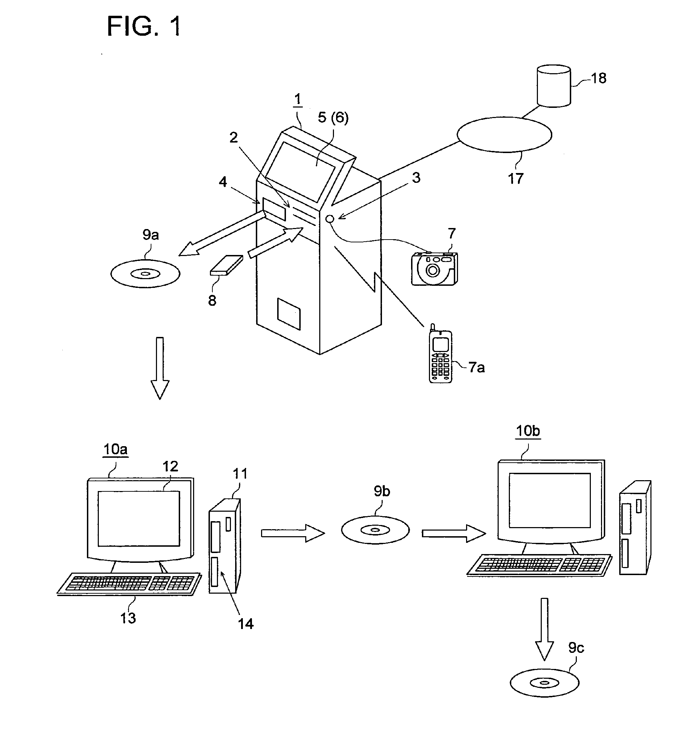

In order to detail the above embodiment, referring to Fig. 1 to Fig. 11, the copy program according to the first example of the present invention, and a recording medium in which the copy program is recorded, will be described below.

As shown in Fig. 1, the system of the present example is at least provided with, a recording medium making apparatus 1 for making a recording medium 9a in which the static image data or moving image data, music data (hereinafter, these are generally called simply data.), and the copy program which is a characterized part of the present invention, are at least recorded, and a computer devices 10a, 10b ... .

Further, the recording medium making apparatus 1 is provided with a media loading section 2, into which the recording medium such as a smart media, compact flash (trade name), memory stick (trade name), SD memory card, multimedia card (hereinafter, called media 8), is loaded, a device connection section 3 in which a digital camera 7 (both of digital still camera and digital movie camera are included), or a photographic device such as a cell phone with a camera 7a, is connected with wire or wireless, infrared ray, a data input means such as a network connection section for downloading the image data from the server 18 through a communication network 17 such as the internet, a recording medium loading section 4 into which a recording medium 9a such as CD-R/RW or DVD ± R/RW, DVD-RAM, Blue-ray disk, the image data read out from the media 8 or digital camera 7, or downloaded from the server 18, or the images data converted into a format reproducible in DVD player or DVD recorder, game machine, is recorded, is loaded, an operation section 6 such as buttons, key-board, mouse, and a display section 5 such as LCD, CRT, (in the view, a touch-panel which combines the operation section 6 with the display section 5, is shown.). Hereupon, in Fig. 1, unmanned terminal (Kiosk) which is installed in a shop such as a photographic shop or convenience store is shown, however, the mode of the recording medium making apparatus 1 is arbitrary, and an exclusive set top box having the input means and the recording means, or a portable writer, personal computer, may be applicable.

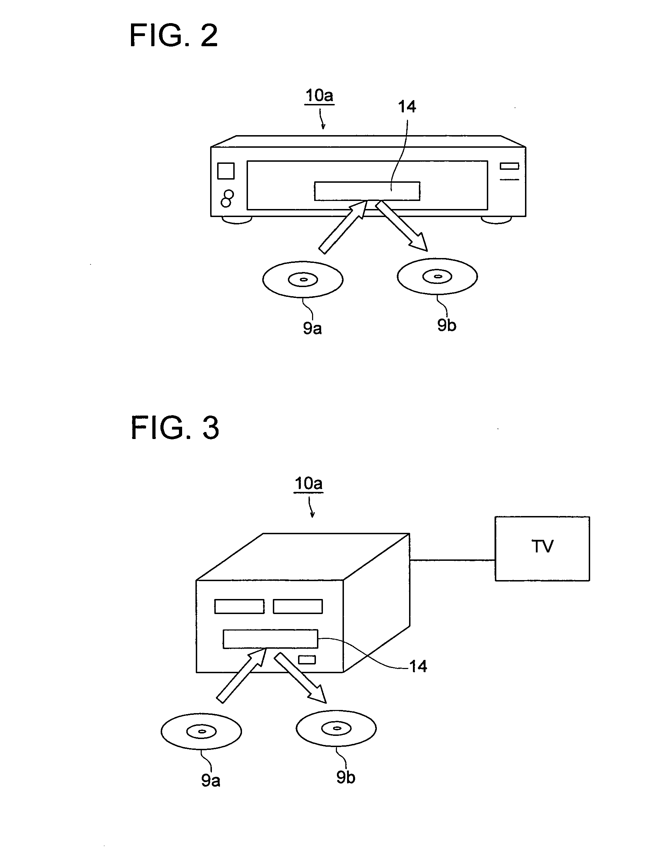

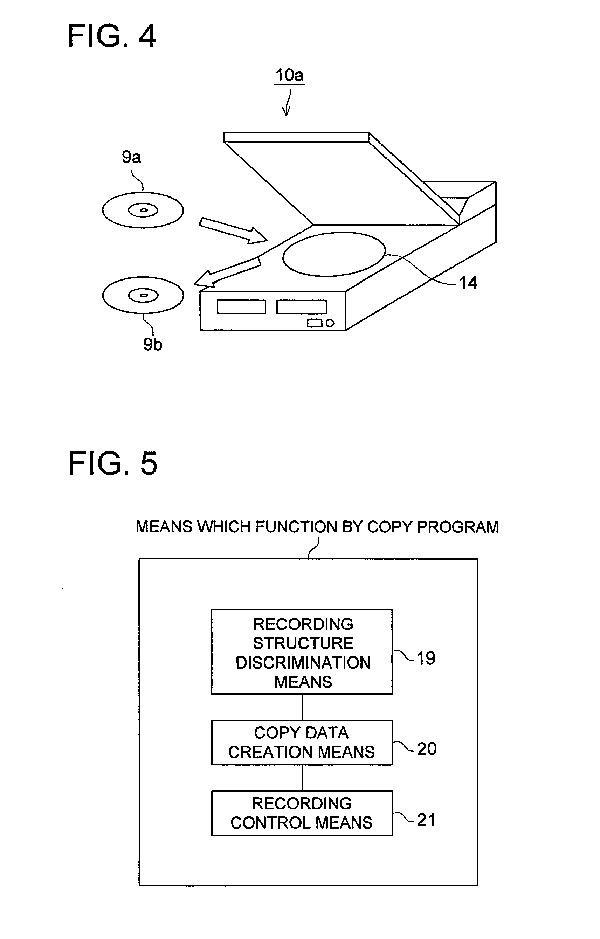

Further, the computer devices 10a, 10b ... are provided with main bodies 11 having the recording medium loading section 14 into which the above recording medium 9a is loaded, and the display means 12 such as the monitor, and the operation means 13 such as the key-board, mouse. Hereupon, in Fig. 1, as the computer devices 10a, 10b..., a case where the personal computer is used, is shown, however, the mode of the computer devices 10a, 10b... is also arbitrary, for example, it can be applied by a home server, or as shown in Fig. 2, by a HDD recorder having a calculation processing function, or DVD recorder, game machine, or as shown in Fig. 3, by an exclusive set top box, as shown in Fig. 4, by a portable writer.

Further, when a means which functions by a copy program is shown by a block diagram, it will be Fig. 5. That is, it has a recording structure discrimination means 19 for discriminating the recording structure of the data specified based on the structure of the folder generated in the recording means (hard disk of the computer devices 10a, 10b...) or the name of the folder, according to a predetermined rule, a copy data making means 20 for making the data to be copied in another recording means (recording media 9b, 9c) referring to the recording structure, and a recording control means 21 for controlling the copying of the data and the copy program and the other program at need in another recording means.

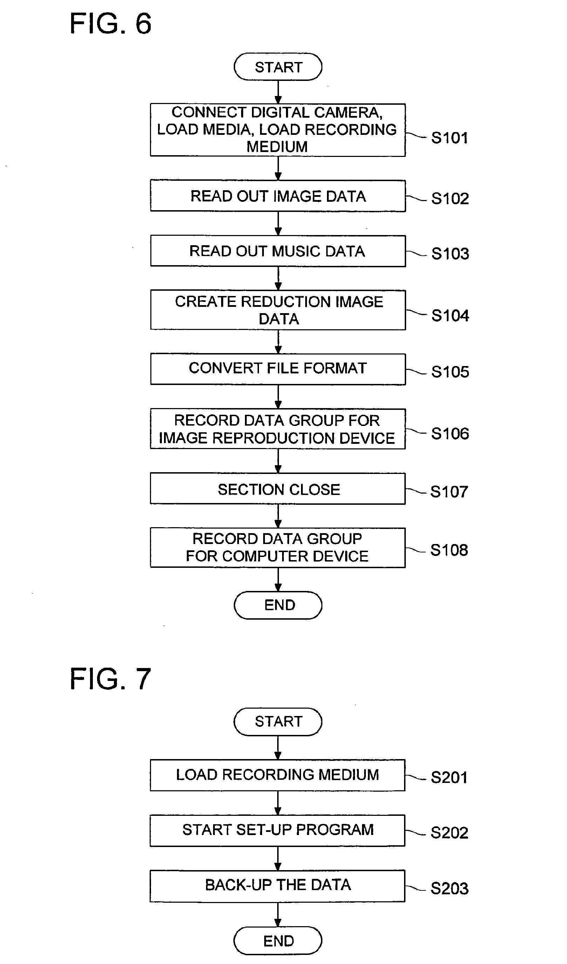

Next, the sequence for making the recording medium 9a by using the above recording medium making apparatus 1 will be described referring to the flowchart view of Fig. 6.

Initially, in step S101, the media 8 are loaded into the media loading section 2 of the recording medium making apparatus 1, or the digital camera 7 or a cell-phone with a camera 7a is connected to the device connection section 3, or the network connection section is connected to the communication network 17, and the recording medium 9a is loaded into the recording medium loading section 4. Hereupon, as the recording medium 9a, a recording medium in which the data is not recorded, may also be used, or the structure in which the user purchases the recording medium in which the copy program or another program such as the slide-show program, music data are previously recorded, may also be allowed. After that, in step S102, the image data (the data including the static image data or moving image data, the image information, is generally called the image data.) recorded in the digital camera 7 or media 8, or the image data recorded in the server 18 is read out, and by using at need the display section 5 or the operation section 6, the image data recorded in the recording medium 9a is selected.

Next, in step S103, the music data using as BGM for reproducing at need the image data as the music attached slide-show is read out from the media 8 or server 18, the memory means of the recording medium making apparatus 1. Hereupon, the music data may also be selected by the user, or the music data which is previously set as a default, may also be used.

Next, in step S104, the images data (RAW data) read out from the digital camera 7 is edited to the image data of a size or a format appropriate for the display or the print, or the reduced image data such as the thumbnail image data whose data size of the read-out image data is reduced, or the screen nail image data, is made. This reduced images data is allowable when the data size is smaller than the inputted image data, for example, the image data whose pixel number is limited, or the color number, the images data whose color reproducing area is limited, can be made, however, in order to effectively use the reduced image data, it is preferable that the pixel number more than the resolution of the monitor of the recording apparatus 10, or the pixel number of the degree in which the photographic print of the degree of service size can be made, is provided.

Next, in step S105, the read-out image data is converted at need into the moving image data (the data such as Video-CD format, DVD-Video format, HDTV format) which can be read-out by the image reproduction devices such as the DVD player or DVD recorder, game machine. Hereupon, a method for making the moving image data from the image data is not particularly limited, however, when the static image data is displayed like as the slide-show, it is allowable when the moving image data is generated by adding the data of the difference 0 for a time of the slide display, or the moving image data is generated by adding the difference data based on the slide effect set in the slide-show program to the static image data.

Next, in step S106, by using the data transfer means, after the made moving image data or related files (hereinafter, these are generally called the data group for the image reproduction device), are transferred to a predetermined folder for writing which is previously set, by using the data recording means, the data group for the image reproduction device are read-out from the folder, and records them in the inside of the logical address area of the recording medium 9a. After that, in step S106, before, by using the data recording means, the data for computer device is recorded, in order to separate the data area usable in the image reproduction device, the session is closed once.

Next, in step S108, after, by using the data transfer means, the read-out or converted image data or music data, previously recorded program or set file (hereinafter, they are generally called the data group for computer device) are transferred to the previously provided predetermined folder for writing, by using the recording means, the data group for computer device are read-out from the folder, and recorded in the outside of the data group for the image reproduction device previously recorded in the recording medium 9a, and a series of writing processing is ended.

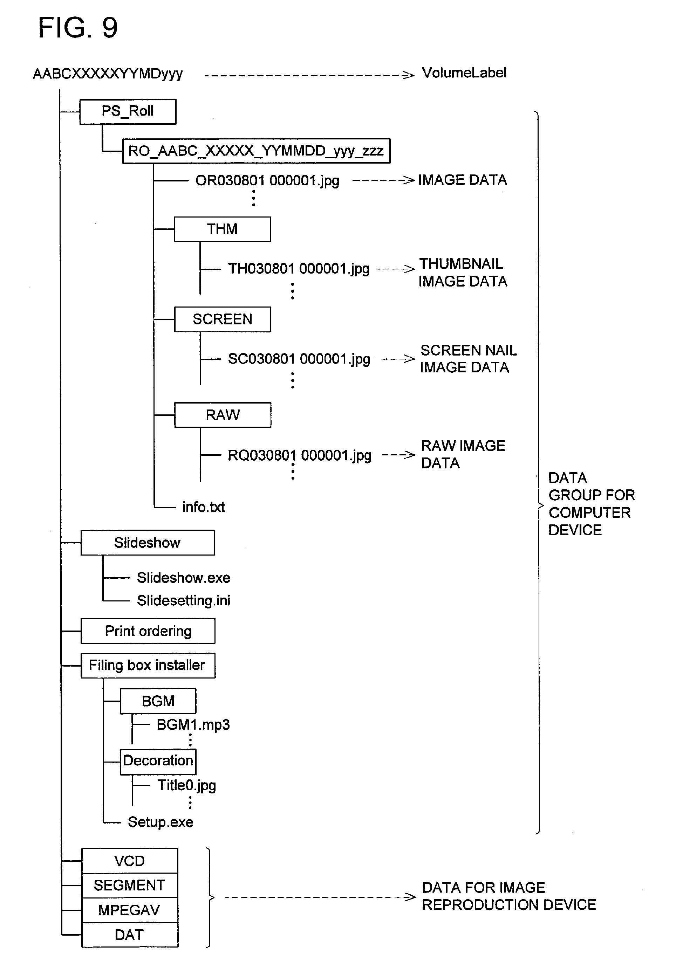

The recording structure of the recording medium 9a made by the above sequence becomes, for example, as shown in Fig. 9, and the data group for computer device is composed of the image data group such as the images data in "PS_Roll" folder, thumbnail image data, screen nail image data, RAW data, the slide-show program in the "Slideshow" folder, and setting file of the slide-show, the program data for the print order in the "Print ordering" folder, and the music data in "Filling box installer" folder, and is composed of the other data group such as the data composing the operation image screen and the program (setup.exe) which automatically backs-up the above data, and includes the copy program, and the data group for the image reproduction device is composed of a file which correlates the image data in "VCD" folder as the Video-CD format, DVD-Video format, the data for HDTV format, the image data displayed on TV image screen in "SEGMENT" folder, moving image data in "MPEGAV" folder, and the application for displaying the static image data on TV image screen in "DAT" folder.

Hereupon, the recording structure of the image data group is arbitrary, however, in order to make the control in the case where the images data group is backed-up in the computer devices 10a, 10b..., easy, it is preferable that the folder is structured following a predetermined rule, and a unique name is given to the folder.

For example, as shown in Fig. 9, in the lower hierarchy of the folder (PS_Roll) showing the storing place of the image data, the folder (RO_AABC_XXXXX_YYMMDD_yyy_zzz) showing the storing place of the image data for each media 8, for each device, for each film is made, and each element may also be formed of AA: code number of each country(00-ZZ), B: code number for each region (0-Z), C: code number showing the making method of the recording medium (for example, k, in the case which is made in kiosk, L, which is made in the lab), XXXXX: random ID number, yymmdd: numerals specifying the writing year, month and date, yyy: sequential number for each day, zzz: sequential number for each predetermined unit(for example, for each film or for each medium, for each device).

Next, referring to the flowchart view in Fig. 7, the sequence for backing-up the data recorded in the recording medium 9a made by the above recording medium making apparatus 1, by the computer devices 10a, 10b... will be described.

Initially, in step S201, when the recording medium 9a is loaded into the recording medium loading section 14 of the computer devices 10a, 10b..., in step S202, a predetermined program (for example, set up program : setup.exe) is automatically started, in step S203, the set up program extracts from the recording medium 9a the images data group composed of the image data, thumbnail image data, and screen nail image data and RAW image data, and the other data group composed of the slide-show program, slide-show setting file, program data for the print order, music data, image screen structuring data, set up program, and together with the copy program (herein, Filing Box. Exe) generated when back-up, records in a predetermined recording position of the recording means such as the hard disk of the computer devices 10a, 10b....

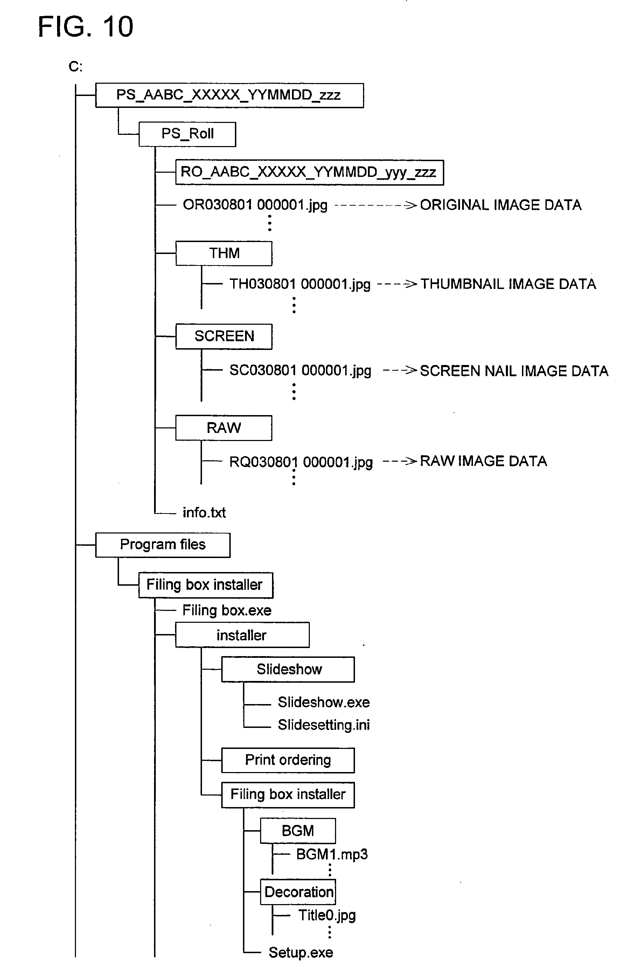

Herein, the recording structure in the case where the image data group or the other data group, the copy program are recorded, is also arbitrary, however, in order to make the control of the images data read-out from the recording medium 9a easy, the recording structure of the recording medium 9a is maintained as shown in Fig. 10, and the images data group is recorded, and in a predetermined recording position (for example, the lower hierarchy of Program Files), the folder (herein, Filing Box) showing the storing position of the emigrated data is made, and including that the copy program is recorded in the folder, it is preferable that the folder (herein, installer) showing the storing position of the other data group is made, and the above other data group is recorded. Further, when backs-up the image data of a plurality of recording mediums 9, in order to easily control these image data, the folder (PS_AABC_XXXXX_YYMMDD_zzz) showing the storing position of the image data emigrated in the higher hierarchy of PS_Roll folder may also be made.

Hereupon, in the above sequence, the structure when the recording medium 9a is loaded into the recording medium loading section 14, the set up program is automatically started and the data is backed-up, is applied, however, the structure when the recording medium 9a is loaded, the menu image screen is displayed, and when the back-up is selected from that, the back-up is conducted, may also be applied.

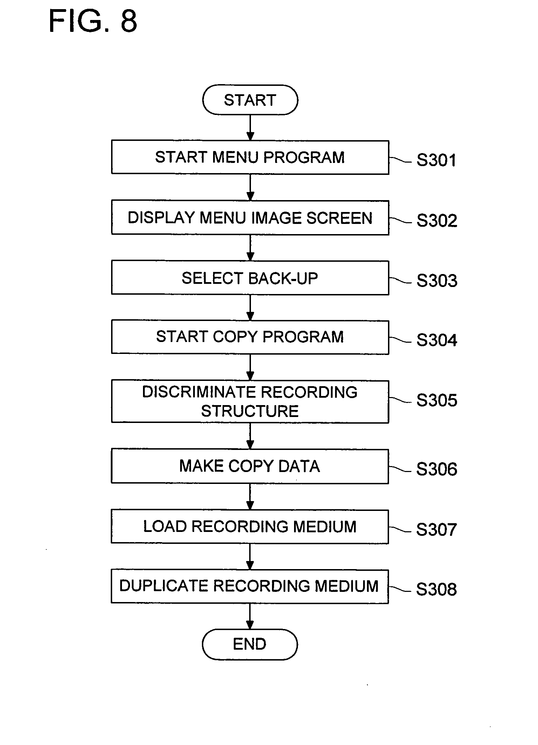

Next, in order to make the other user can also use these data in the same manner, referring to flowchart view in Fig. 8, the sequence in which these data and copy program are recorded in another recording medium 9b will be described.

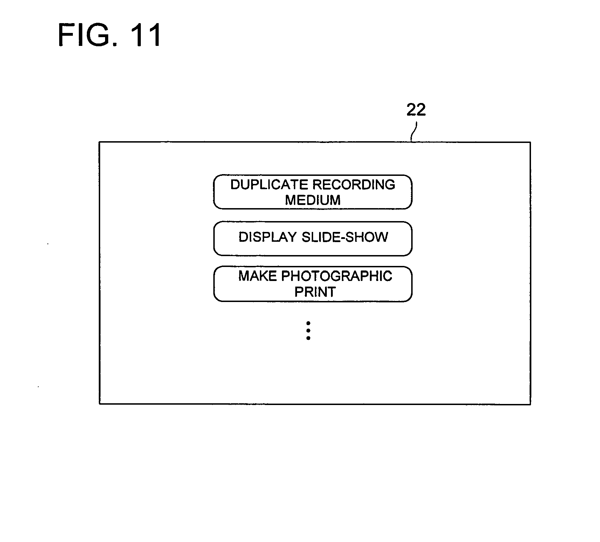

Initially, in step S301, when a predetermined program (for example, menu program) is started, in step S302, the menu image screen 22 as shown in Fig. 11 is displayed on the display means 12. On this menu image screen 22, a list of the processing (for example, the duplicate of the recording medium, slide-show display, the making of photographic print) which can be conducted by using the image data recorded in the recording medium 9a, is displayed in the selectable manner.

Next, in step S303, when the user selects the item of duplicate of the recording medium from the menu image screen 22 by using the display means 12 or operation means 13, in step S304, the copy program is started, in step S305, by using the recording structure discrimination means 19, the hierarchy structure of the folder made in the hard disk of the computer device 10a or the recording structure specified based on the folder name is discriminated, and referring to the recording structure, the image data, the image data group composed of the thumbnail image data and screen nail image data, and RAW image data, and the other data group composed of the slide-show program, slide-show setting file, the data for print order, music data, image screen structure data are specified, and in step S306, by using the copy data making means 20, the copy data is made.

Next, in step S307, when the recording medium 9b is loaded into the recording medium loading section 14 of the computer device 10a, by using the recording control means 21, the above image data group and the other data group including the copy program are recorded in a predetermined recording position of the recording medium 9b. Also in this case, these data groups or the recording structure when the program is recorded, is also arbitrary, however, it is preferable that the image data group or the other data group is recorded so that the same recording structure as the recording medium 9a is duplicated.

Then, when the recording medium 9b made in the above sequence is loaded into another computer device 10b, following the flow of Fig. 7, the image data group or the other data group, copy program can be backed-up in the computer device 10b, further, when the recording medium 9c is loaded into the computer device 10b, and the copy program is made to be functioned, the image data group or the other data group including the copy program is recorded in the recording medium 9c in the same manner. When such an operation is repeated, the system in which the data recorded in the original recording medium 9a can be used by many users, can be structured.

### (Example 2)

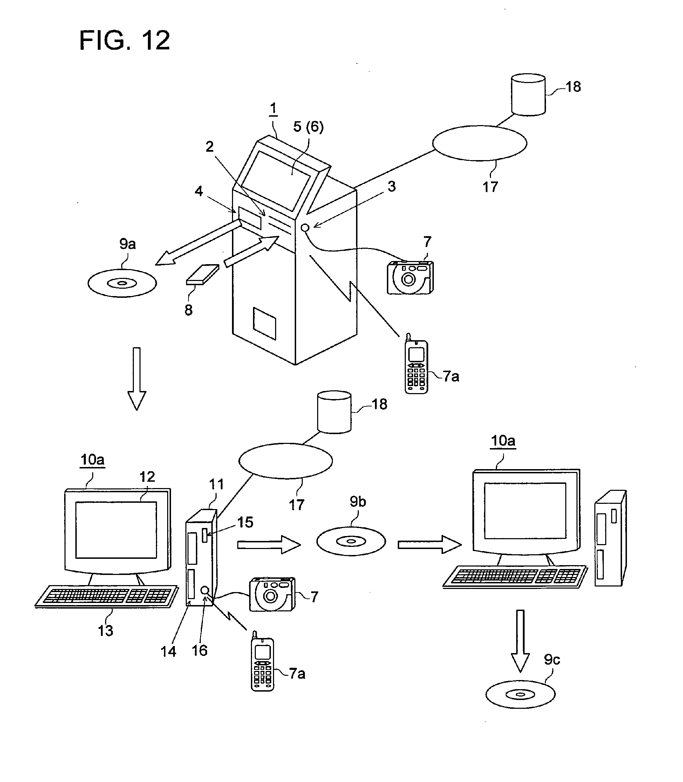

Next, referring to Fig. 12 to Fig. 17, the copy program according to Example 2 of the present invention and the recording medium in which the copy program is recorded, will be described.

In the above Example 1, a case where the image data group recorded in the recording medium 9a or the other data group is recorded as it is, in another recording media 9b, 9c... is shown, however, in the cases where the recording media 9b, 9c... are provided to the acquaintance, it is preferable that unnecessary image data or music data is deleted, or the image data or music data recorded in another recording means can be added. Accordingly, in the present example, the sequence in which the recording media 9b, 9c... in which the data different from the recording medium 9a is recorded, are made, will be written.

As shown in Fig. 12, the system of the present example is at least provided with the recording medium making apparatus 1 for making the recording medium 9a in which, in the same manner as the first example, the data such as the static image data or moving image data, music data, and the copy program are at least recorded, and the computer devices 10a, 10b... for making the other recording media 9c, 9c... in which, together with the back-up of the data recorded in the recording medium 9a, by using the installed copy program, the above data and the copy program are at least recorded, are at least provided. Further, the computer devices 10a, 10 b... are provided with the recording medium loading section 14 for loading the recording medium 9a, the device connection section 16 for connecting the photographic device such as the digital camera 7, or the cell phone with a camera 7a, the media loading section 15 into which media 8 are loaded, and the network connection section for downloading the image data from the server 18 through the communication network 17. Hereupon, also in the present example, the mode of the computer devices 10a, 10b... is arbitrary, and for example, it can also be made the home server, the HDD recorder or DVD recorder, game machine, or the exclusive set top box, and the portable writer.

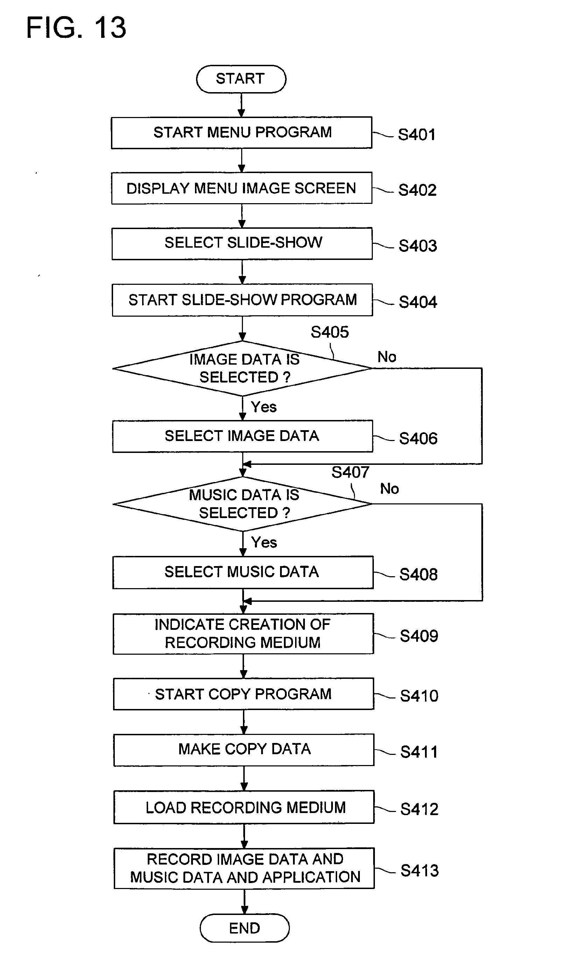

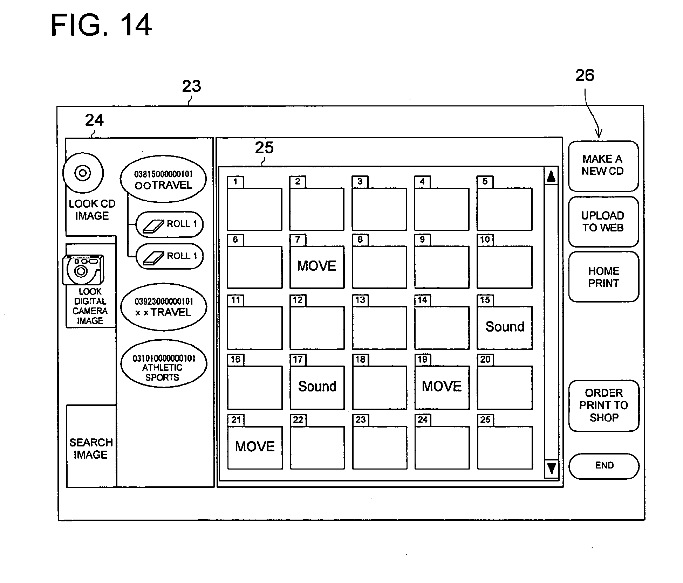

By using the computer devices 10a, 10b... provided with such a function, the sequence by which the image data group which is backed-up in the hard disk, or the other data group including the copy program is further recorded in another recording medium 9b, will be described below, referring to the flowchart view in Fig. 13, and the image screen structural examples in Fig. 14 to Fig. 17.

Initially, in step S401, when a predetermined program (for example, menu program) is started, in step S402, in the same manner as in Example 1, the menu image screen 22 is displayed as shown in Fig. 11. On this menu image screen 22, a list of the processing which can conduct by sung the image data recorded in the recording medium 9a, (for example, the duplicate of the recording medium, display of the slide-show, making of the photographic print), is displayed in a selectable manner, and when from them, the slide-show display is selected in step S403, in step S404, the slide-show program is started, and the album display image screen 23 with the operation menu as shown in Fig. 14, is displayed.

On this album display image screen 23 with the operation menu, for example, a tag display column 24 showing the supply source of the image data (for example, the recording medium 9a or the hard disk of the computer device 10a, digital camera 7, media 8), and an album display column 25 view-displaying the reduction image (thumbnail image) of the image data, and an operation menu-column 26 which selects the processing using image data, are displayed. Hereupon, the tag display column 24, album display column 25, operation menu column 26 of the drawing, are illustration, and can be made the arbitrary structure, however, it is necessary that at least in operation menu column 26, an item for making a new recording medium 9b is included.

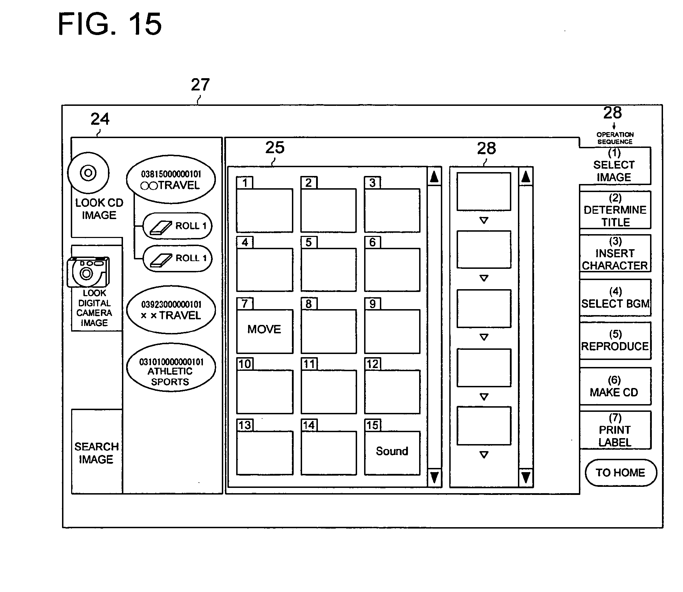

Then, when "make a new CD" is selected from the operation menu column 26 by using the mouse or key board, touch panel, the slide-show making image screen 27 as shown in Fig. 15 is displayed. On this slide-show making image screen 27, for example, the tag display column 24 showing the supply source of the image data, album display column 25 for view-displaying the reduction image of the image data, selection image display column 28 displaying the image data reproduced by the slide-show, and the sequence display column 29 clearly specifying the operation sequence, are provided, and in step S406, when the user selects the desired image data by using the mouse or key board, the selected image data is displayed on the selection image display column 28. Hereupon, the data to be selected is not limited to the static image data, but may select the moving image data or music data, and in order to easily distinguish the moving image data or the music data, the character such as "Sound" or "MOVIE" can also be superimposed and displayed on the corresponding data.

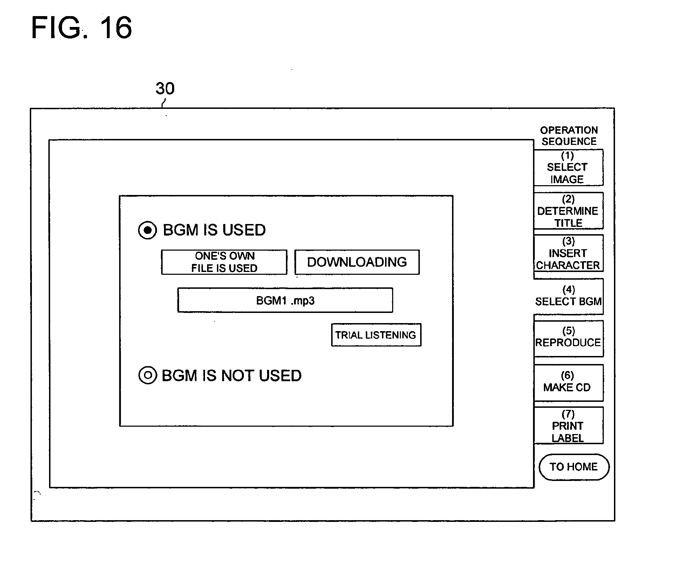

Next, when an album title is inputted at need, or character is inserted in the image, the music data selection image screen 30 as shown in Fig. 16 is displayed. This music data selection image screen 30 is structured so that it can be selected that BGM is used, when BGM is used, the music data of user himself such as the music data which is previously recorded in the hard disk of the computer device 10a, is used, or the music data recorded in the server 18 is down loaded, and in step S407, when BGM is used, the user selects the desired music data in step S408.

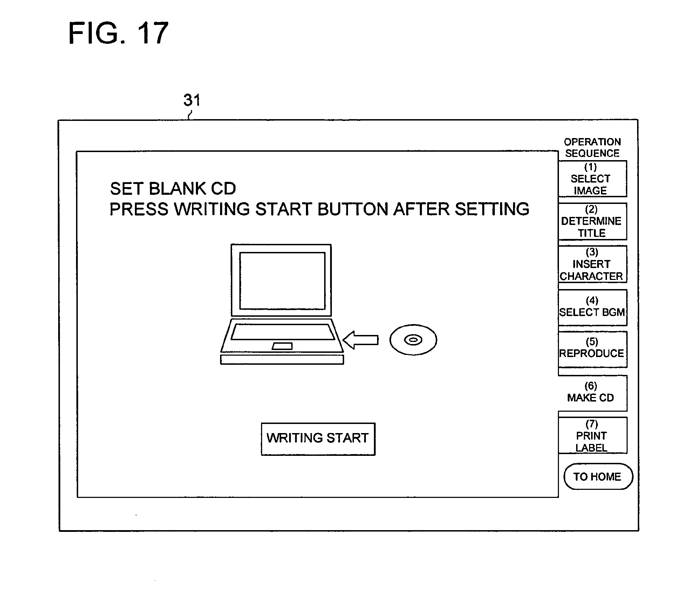

Next, after the slide-show is reproduced and confirmed at need, when the creation of CD is selected, a writing indication image screen 31 as shown in Fig. 17 is displayed, and when the recording medium 9b which is no data and blank, (or, the recording medium 9b in which the identification information is previously recorded) is inserted into the recording medium loading section 14 and in step S409, a writing start button is pressed, in step S410, the copy program is started, and the hierarchy structure of the folder made in the hard disk or the recording structure of the data specified based on the name of folder is discriminated by using the recording structure discrimination means 19, referring to the recording structure, the image data group composed of the image data, thumbnail image data, screen nail image data, and RAW image data, and the other data group composed of the set up program including the slide-show program, slide-show setting file, program data for print order, music data, image screen structure data, copy program are specified, and in step S411, the copy data is made by using the copy data making means 20.

Next, in step S412, when the recording medium 9b is loaded into the recording medium loading section 14 of the computer device 10a, in step S413, the above image data group and the other data group including the copy program are recorded in a predetermined recording position of the recording medium 9b by using the recording control means 21. Also in this case, the recording structure when these data group or program is recorded is also arbitrary, however, it is preferable that the image data group or the other data group is recorded so that the same recording structure as the recording medium 9a is duplicated.

As described above, in the present example, the data recorded in the recording medium 9a is not used as it is, but because, by using the selected image data or music data, new recording media 9b, 9c... are made, the value of the recording media 9b, 9c... themselves can be further enhanced, hereby, the acceleration of the use of the service using the image data can be intended.

Hereupon, in the above description, the case where only the image data and music data are selected, is shown, however, it can also be made in such a manner that the program can also be selected. Further, in each of the above examples, the structure in which the image data for the image reproduction device is not backed-up in the computer devices 10a. 10b..., is described, however, the present invention is not limited to the above example, the structure in which this image data is also backed-up, and when the other recording media 9b, 9c are created, also the image data is recorded, can also be applied.

### INDUSTRIAL AVAILABLENESS

According to the copy program and the recording medium in which the copy program is recorded, because the data such as the predetermined static image data or moving image data, music data, and the copy program which copies the data and the program of itself as a set, and the application such as slide-show program are recorded at need, when the user who makes the recording medium uses the copy program, because the data backed-up in the computer device and the copy program can be recorded as a set in further another recording medium, the data such as the static image data or moving image data, music data which are backed-up from the recording medium, can be simply recorded in another recording medium, hereby, the system in which these data can be used by many users, can be structured.

## Claims

1. A copy program which is **characterized in that**: it makes a computer function as a means for recording a predetermined kind of data and the program of itself in a recording medium.

2. The copy program which is **characterized in that**: it makes a computer function as a means for recording the inputted data and the program of itself in the recording medium.

3. The copy program which is **characterized in that**: it makes the computer function as a means for recording the data in which the inputted data is converted and made, or the data in which at least one part selected from the inputted data is converted and made, and the program of itself in the recording medium.

4. The copy program written in any one selected from Claim 1 to Claim 3, wherein further it makes the computer function as a means for discriminating the recording structure of the specified recording means, and referring to the recording structure, as a means for reading the data recorded from the recording means in the recording medium.

5. The copy program written in Claim 4, wherein the recording structure is a hierarchy structure of a folder in which the data recorded in the recording medium is stored, or a structure specified based on the folder name.

6. The copy program which is **characterized in that**: it makes the computer function as a means for recording the selected data and the program of itself in the recording medium.

7. The copy program written in any one of Claims 1, 2, 3 and 6, wherein the data to be recorded in the recording medium includes any one of the static image data, moving image data, music data or a program for reproducing the data.

8. The copy program written in Claim 4, wherein the data to be recorded in the recording medium includes any one of the static image data, moving image data, music data or a program for reproducing the data.

9. The copy program written in Claim 5, wherein the data to be recorded in the recording medium includes any one of the static image data, moving image data, music data or a program for reproducing the data.

10. A recording medium which is **characterized in that**: in which the copy program which makes the computer function as a means for recording the predetermined kind of data and the program of itself in the recording medium, is recorded.

11. The recording medium which is **characterized in that**: in which the copy program which makes the computer function as a means for recording the inputted data and the program of itself in the recording medium, is recorded.

12. The recording medium which is **characterized in that**: in which the copy program which makes the computer function as a means for recording the data in which the inputted data is converted and made, or the data in which at least one part selected from the inputted data is converted and made, and the program of itself in the recording medium, is recorded.

13. The recording medium which is **characterized in that**: in which the copy program which makes the computer function as a means for recording the selected data and the program of itself in the recording medium, is recorded.

14. The recording medium written in any one of Claims 10 to 13, wherein the data to be recorded in the recording medium includes any one of the static image data, moving image data, music data or the program for reproducing the data.
